(19) Europäisches Patentamt
European Patent Office
Office européen des brevets

(11) **EP 3 872 437 A1**

(12) **EUROPÄISCHE PATENTANMELDUNG**

(43) Veröffentlichungstag:
01.09.2021  Patentblatt 2021/35

(21) Anmeldenummer: 21156299.6

(22) Anmeldetag: **10.02.2021**

(51) Int Cl.:
$F41G\ 7/22$ (2006.01)   $G01S\ 3/786$ (2006.01)
$G05D\ 1/12$ (2006.01)   $G06T\ 7/246$ (2017.01)
$G08G\ 5/00$ (2006.01)

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME
Benannte Validierungsstaaten:
KH MA MD TN

(30) Priorität: 25.02.2020  DE 102020001234

(71) Anmelder: MBDA Deutschland GmbH
86529 Schrobenhausen (DE)

(72) Erfinder: SCHLOSSER, Wolfgang
82166 Gräfelfing (DE)

(74) Vertreter: Isarpatent
Patent- und Rechtsanwälte Barth
Charles Hassa Peckmann & Partner mbB
Friedrichstrasse 31
80801 München (DE)

(54) **VERBESSERUNG DER TREFFERLEISTUNG WÄHREND DER ZIELANNÄHERUNG**

(57)    Die vorliegende Erfindung betrifft ein computer-implementiertes Verfahren zur Zielführung von Flugkörpern, ein entsprechendes Computerprogramm, ein entsprechendes computerlesbares Medium und eine entsprechende Vorrichtung zur Datenverarbeitung, sowie einen Flugkörper.

Fig. 1

**Beschreibung**

Die vorliegende Erfindung betrifft ein computer-implementiertes Verfahren zur (bildgestützten) Zielführung bzw. Flugführung von Flugkörpern, ein entsprechendes Computerprogramm, ein entsprechendes computerlesbares Medium und eine entsprechende Vorrichtung zur Datenverarbeitung, sowie einen Flugkörper.

Die vorliegende Erfindung basiert auf dem Lucas-Kanade-Verfahren (vgl. Bruce D. Lucas, Takeo Kanade, "An iterative Image Registration Technique with an Application to Stereo Vision", Proceedings of Imaging Understanding Workshop, pp. 121-130 (1981)). Dieses wird überwiegend zur Schätzung von translatorischen Bewegungen zwischen zwei Bildern eingesetzt, kann aber vom Wesen her auch eine vollständige, affine 2D-Transformation (Translation, Rotation, X-/Y-Skalierung, Scherung) zwischen Bildern schätzen.

Ein Flugkörper kann mit dem Vorhaben gestartet werden, ein Ziel zu erreichen. Insbesondere kann beispielsweise eine ein Flugkörper wie ein Flugzeug abfliegen bzw. gestartet werden, das ein vorgegebenes Zielgebiet erreichen soll. Es kann auch ein Flugkörper wie beispielsweise eine Lenkrakete abgeschossen werden, um ein Ziel zu treffen.

Damit der Flugkörper (z. B: Flugzeug, Lenkrakete, usw.) das ausgewählte Ziel erreicht, wird ein Zielhaltepunkt anvisiert. Bei bzw. kurz vor dem Abschuss oder Abflug des Flugkörpers wird die Zielentfernung meist durch eine Laserentfernungsmessung oder eine vergleichbare Technik ermittelt. Über den Flug hinweg kann die aktuelle Zielentfernung durch Inertialmessungen "heruntergezählt" werden. Sowohl durch äußere Einflüsse (z. B. Wind) als auch durch Zielbewegungen wird diese Inertialmessung jedoch mit Annäherung an das ausgewählte Ziel zunehmend unpräziser.

Der Flugkörper nähert sich mit hoher Geschwindigkeit (z. B. 300 km/h [Kilometer pro Stunde] oder mehr) seinem Ziel. Eine in dem Flugkörper verbaute Kamera liefert Bilder des Ziels, wobei sich die Signatur des Ziels zunehmend und gegen Ende massiv von Bild zu Bild vergrößert. Eine automatisierte Zielverfolgung (Tracker) hat mit dieser Bildvergrößerung und der gleichzeitigen Signaturänderung häufig Probleme, den definierten Zielhaltepunkt hinreichend genau auf dem Ziel zu halten. Die Entfernungsschätzung über die Inertialmessung kann zudem Eigenbewegungen des Zieles nicht erfassen, sodass die aus der Inertialmessung geschätzte, aktuelle Zielentfernung nicht mit der wahren, aktuellen Zielentfernung und somit die wahre Größe des Zielabbildes auch nicht mit dessen erwarteter Größe übereinstimmt. Insbesondere kurz vor dem Erreichen des Ziels, also bei geringer wahrer aktueller Zielentfernung (z. B. etwa 100 m [Meter]) kann die automatisierte Zielverfolgung den Flugkörper nicht mehr ausreichend schnell und präzise genug basierend auf den Bilddaten der Kamera auf den Zielhaltepunkt zusteuern.

Die DE 10 2011 016 521 A1 offenbart ein Flugführungsverfahren eines Flugzeugs zur Hinführung desselben an ein mittels Bildinformationen vorgegebenes Zielobjekt und insbesondere an ein Objekt am Boden und/oder eine Umgebung eines vorgegebenen Zielpunkts am Boden. Dabei wird eine Modellprojektion (PM-B) eines vorgegebenen Referenzmodells (RM) des Zielobjekts oder eines Teils des Zielobjektes oder der Umgebung des vorgegebenen Zielpunktes durchgeführt, bei der aufgrund der aktuellen Blickrichtung des Flugzeugs eine Projektion des Referenzmodells oder des Teils desselben auf eine Bildebene erzeugt wird, die mit einer zulässigen Abweichung der Bildebene entspricht, auf der die Erfassung des Zielobjekts oder der Umgebung durch einen Bildsensor des Flugzeugs basiert. Dazu werden Informationen zur aktuellen Blickrichtung des Flugzeugs aus einem Navigationsmodul oder einem Schnittstellenmodul des Flugführungssystems oder einem Filtermodul insbesondere als Ergebnis eines Schätzverfahrens aus einer früheren Iteration des Flugführungsverfahrens verwendet. Weiter wird eine Textur-Korrelation (T3-TK1) aus den Bildinformationen eines aktuellen oder quasiaktuellen Bildes (B1) einer zeitlichen Abfolge von erfassten Bildern (B1, B2, B3) vom Zielobjekt oder der Umgebung und aus den in der Modellprojektion (PM-B) ermittelten Projektionsinformationen sowie aus einer Ermittlung einer geschätzten aktuellen Flugzeug-Zielobjekt-Relativposition durchgeführt. Ferner wird eine Textur-Korrelation (T3-TK2) mit Bildinformationen eines aktuellen Bildes und Bildinformationen für ein Bild (B2), das als zeitlich früher angesehen wird als das jeweils aktuelle Bild (B3), jeweils aus der zeitlichen Abfolge von erfassten Bildern (B1, B2, B3) durchgeführt und eine geschätzte Ist-Bewegungsrichtung und/oder Ist-Geschwindigkeit des Flugzeugs ermittelt. Zudem wird ein Schätzverfahren (F-Ges) zur Schätzung einer Information der aktuellen Flugzeug-Zielobjekt-Relativposition des Flugzeugs relativ zur Position des Zielobjekts und/oder einer Bewegungsrichtung und /oder eines Ist-Geschwindigkeitsvektors des Flugzeugs durchgeführt und die Flugzeug-Zielobjekt-Relativposition und/oder der Ist-Geschwindigkeitsvektor an ein Lenkungsmodul (LM) übermittelt. Schließlich werden Steuerungskommandos an Stellantriebe zur Betätigung von aerodynamischen Steuerungsmitteln des Flugzeugs in dem Lenkungsmodul (LM) aufgrund der ermittelten Flugzeug-Zielobjekt-Relativposition und des ermittelten Ist-Geschwindigkeitsvektors erzeugt, um das Flugzeug zum Zielobjekt zu führen.

Vor diesem Hintergrund liegt der vorliegenden Erfindung die Aufgabe zugrunde, bei einer bildgestützten Flugführung eines Flugkörpers zu einem zu erreichenden Ziel eine höhere Präzision bzw. Trefferleistung, insbesondere auch bei geringem wahrem aktuellem Zielabstand des Flugkörpers von dem zu erreichenden Ziel zu erreichen.

Erfindungsgemäß wird diese Aufgabe gelöst durch ein computer-implementiertes Verfahren zur (bildgestützten) Zielführung bzw. Flugführung von Flugkörpern mit den Merkmalen des Patentanspruchs 1 sowie durch ein entsprechendes Computerprogramm, ein entsprechendes computerlesbares Medium, eine entsprechende Vorrichtung zur Datenverarbeitung und einen Flugkörper mit den Merkmalen der nebengeordneten unabhängigen Ansprüche.

Demgemäß ist ein computer-implementiertes Verfahren zur (bildgestützten) Zielführung bzw. Flugführung von Flugkörpern vorgesehen. Das computer-implementierte Verfahren umfasst die folgenden Schritte:

a) Einmaliges Empfangen eines Templates T einschließlich eines Zielhaltepunkts vor dem Abflug eines Flugkörpers.
b) Wiederholtes Empfangen von Bilddaten I einer Kamera des Flugkörpers und von inertialen Entfernungsschätzungen $D^{IM}_{neu}$ aus einer Inertialmessung während des Flugs des Flugkörpers mit einer vordefinierten Bildtaktrate $f_B$.
c) Pro Bildtakt der vordefinierten Bildtaktrate $f_B$ Berechnen eines vorskalierten Startparametervektors p* für diesen Bildtakt unter Verwendung einer zuletzt berechneten Entfernungskorrektur $\Delta D$.
d) Pro Bildtakt der vordefinierten Bildtaktrate $f_B$ Durchführen eines iterativen Lucas-Kanade-Verfahrens zur Berechnung eines geschätzten Parametervektors p einschließlich einer aktuellen Skale $s_{neu}$ basierend auf den aktuellen Bilddaten I und dem Template T ausgehend von dem berechneten vorskalierten Startparametervektor p* mittels einer Abbildung $W_p$, wobei der Zielhaltepunkt mittels der Abbildung $W_p$ unter Verwendung des geschätzten Parametervektors p verbessert wird.
f) Pro Bildtakt der vordefinierten Bildtaktrate $f_B$ Berechnen einer Entfernungskorrektur $\Delta D$ für den nächsten Bildtakt aus einer aktuellen Skale $s_{neu}$, einer vorherigen Skale $s_{alt}$, einer aktuellen inertialen Entfernungsschätzung $D^{IM}_{neu}$ und einer vorherigen inertialen Entfernungsschätzung $D^{IM}_{alt}$.
h) Pro Bildtakt der vordefinierten Bildtaktrate $f_B$ Regeln des Flugkörpers zur Zielführung des Flugkörpers basierend auf dem verbesserten Zielhaltepunkt.

Weiter ist ein Computerprogramm vorgesehen, das Befehle umfasst, die bei der Ausführung des Programms durch einen Computer diesen veranlassen, die Schritte des computer-implementierten Verfahrens zur (bildgestützten) Zielführung bzw. Flugführung von Flugkörpern auszuführen.

Ferner ist ein computerlesbares Medium vorgesehen, auf dem das Computerprogramm gespeichert ist.

Zudem ist eine Vorrichtung zur Datenverarbeitung vorgesehen, die Mittel zur Ausführung des computer-implementierten Verfahrens zur (bildgestützten) Zielführung bzw. Flugführung von Flugkörpern umfasst.

Außerdem ist ein Flugkörper vorgesehen, der eine Kamera und die Vorrichtung zur Datenverarbeitung umfasst. Die Kamera ist mit der Vorrichtung zur Datenverarbeitung kommunikativ verbunden und ausgebildet, wiederholt Bilddaten I an die Vorrichtung zur Datenverarbeitung mit der vordefinierten Bildtaktrate $f_B$ zu senden.

Im Schritt a) wird das Template T empfangen. Neben dem Template T wird auch der Zielhaltepunkt, zu welchem der Flugkörper hin gesteuert werden soll, empfangen, um mit dem Flugkörper möglichst exakt das entsprechende Ziel zu erreichen. Das zu treffende Ziel wird durch das Template bzw. eine Signatur, also einen Bildausschnitt aus wenigstens einem Bild eines Zielgebiets, auf dem das zu erreichende Ziel wenigstens teilweise oder vollständig abgebildet ist, beschrieben. Das Bild des Zielgebiets kann von wenigstens einer Kamera, insbesondere von einer IR-Kamera des Flugkörpers oder einer separaten (IR-)Kamera aufgenommen und an ein Kontrollsystem übertragen worden sein. Das Template kann automatisch oder durch einen Benutzer ("von Hand") in dem Bild des Zielgebiets ausgewählt bzw. "ausgeschnitten" worden sein. Beispielsweise kann der Benutzer auf einem Bildschirm, auf dem das Bild des Zielgebiets durch das Kontrollsystem angezeigt wird, das Template des zu erreichenden Ziels auswählen, indem er das zu erreichender Ziel mittels eines Cursors, den er über ein Eingabegerät (z. B. eine Maus, ein Touch-Screen, usw.) steuert, aus dem Bild des Zielgebiets "ausschneidet".

Im Schritt b) werden wiederholt bzw. kontinuierlich die Bilddaten I von der (IR-)Kamera des Flugkörpers mit der vordefinierten Bildtaktrate $f_B$ empfangen. Die (IR-)Kamera des Flugkörpers sendet dazu entsprechend mit der vordefinierten Bildtaktrate $f_B$ die Bilddaten I. Die (IR-)Kamera des Flugkörpers nimmt mit der vordefinierten Bildtaktrate Bilder des Zielgebiets auf, in dem sich das zu erreichende Ziel befindet. Auf den aufgenommenen Bildern ist demnach das Zielgebiet mit dem zu erreichenden Ziel abgebildet bzw. markiert. Zudem werden mit der vordefinierten Bildtaktrate $f_B$ kontinuierlich inertiale Entfernungsschätzungen als die aktuelle inertiale Entfernungsschätzung $D^{IM}_{neu}$ bzw. $D^{IM}_t$ (inertiale Entfernungsschätzung zum aktuellen Zeitpunkt bzw. Bildtakt t) empfangen. Die inertialen Entfernungsschätzungen $D^{IM}$ bzw. die Änderungen der inertialen Entfernungsschätzungen $\Delta D^{IM}$ basieren auf der bekannten Geschwindigkeit v des Flugkörpers (z. B. 300 Km/h) und der verstrichenen Zeit $\Delta t$.

$$\Delta D^{IM} = v \, \Delta t$$

Ist der Flugkörper beispielsweise $\Delta t = 0,02$ s [Sekunden] mit der bekannten Geschwindigkeit von beispielsweise v = 360 km/h (100 m/s [Meter pro Sekunde]) auf das zu erreichende Ziel zu geflogen, so hat sich die Entfernung (bei statischem zu erreichendem Ziel) in dieser Zeit um 2 m [Meter] verringert. Die vordefinierte Bildtaktrate kann beispielsweise 50 Hz [Hertz] betragen $f_B$ = 50 Hz.

Im Schritt c) wird in jedem Bildtakt der vordefinierten Bildtaktrate $f_B$ der vorskalierte Startparametervektor p* für das Lucas-Kanade-Verfahren dieses Bildtakts (Schritt d)) berechnet. Dazu wird der vorherige berechnete Parame-

tervektor $p_{alt}$ bzw. $p_{t-k}$, mit k gleich ein oder mehr Bildtakte, basierend auf der zuletzt berechneten Entfernungskorrektur $\Delta$D angepasst, indem die Skale s des vorherigen berechneten Parametervektors $p_{alt}$ mittels der zuletzt berechneten Entfernungskorrektur $\Delta$D korrigiert bzw. vorskaliert wird.

Im Schritt d) wird das empfangene Template T des zu erreichenden Ziels von Bild zu Bild, also in jedem Bildtakt, mit der automatisierten Zielverfolgung (Tracker) des Lucas-Kanade-Typs (Lucas-Kanade-Verfahren) verfolgt. Hierfür ist der "vier-parametrige" Parametervektor p hinreichend. Der vier-parametrige Parametervektor p umfasst folgende vier Parameter:

- Translation in X-Richtung $\Delta x_h$;
- Translation in Y-Richtung $\Delta x_v$;
- Rotation/Drehwinkel $\alpha$; und
- Skale s (Zoomfaktor).

$$p = \begin{pmatrix} \Delta x_h \\ \Delta x_v \\ \alpha \\ s \end{pmatrix}$$

Die automatisierte Zielverfolgung (Tracker) des Lucas-Kanade-Typs bzw. das Lucas-Kanade-Verfahren, das vorliegend zum Einsatz kommt, ist in "An iterative Image Registration Technique with an Application to Stereo Vision" von Bruce D. Lucas, Takeo Kanade, Proceedings of Imaging Understanding Workshop, pp. 121-130 (1981), beschrieben.

In dem Lucas-Kanade-Verfahren wird der Parametervektor p solange iterativ geschätzt bzw. verbessert, bis ein Abbruchkriterium erfüllt ist. Das Abbruchkriterium kann beispielsweise eine vordefinierte, minimale Fehlerreduktion

$$\Delta E_{min} = \frac{(E_{n-1}(p) - E_n(p))}{E_{n-1}(p)},$$

$\Delta E_{min}$ für das Funktional E(p) (siehe unten), oder eine vordefinierte, minimale Änderung $\Delta p_{min}$ des Parametervektors p pro Iteration und zusätzlich oder alternativ eine maximale Zeitdauer $T_{max}$ für das Lucas-Kanade-Verfahren sein. Insbesondere kann vordefiniert sein, dass das Lucas-Kanade-Verfahren in Schritt d) vor Beginn des neuen Bildtakts bzw. innerhalb des aktuellen Bildtakts abgeschlossen sein muss $T_{max} \leq 1/f_B$. Beispielsweise kann bei einer Bildtaktrate $f_B$ von 50 Hz die maximale Zeitdauer Tmax 0,018 s betragen, $f_B$ = 50 Hz → $T_{max}$ = 0,018 s $\leq 1/f_B$.

Für die Zielverfolgung in Flugkörpern wird das Lucas-Kanade-Verfahren dazu benutzt, den vorgegebenen Zielhaltepunkt des zu erreichenden Ziels möglichst genau von Bild zu Bild zu vermessen. Es wird dabei in jedem Bildtakt der vordefinierten Bildtaktrate $f_B$ der Zielhaltepunkt mittels der Abbildung $W_p$ unter Verwendung des (iterativ) geschätzten Parametervektors p verbessert, indem das Template T in den aktuellen Bilddaten I des aktuellen Bildtakts gesucht und basierend darauf der Parametervektor p iterativ geschätzt wird. Der Haltepunkt kann in der Regel in der Mitte des Templates T gewählt werden. Der Haltepunkt wird über die Abbildung/den Warp $W_p$ nach der jeweiligen Schätzung des Parametervektors p auf das aktuelle Bild/die aktuellen Bilddaten I abgebildet. Dort kann eine Differenz zu einem Regelpunkt bestimmt und auf Basis dieser Differenz der Flugkörper navigiert bzw. gesteuert werden (Schritt h)).

Mit dem Lucas-Kanade-Verfahren wird der vier-parametrige Parametervektor p solange iterativ geschätzt bzw. verändert, bis die Abbildung $W_p$, auch "Warp" genannt, die Punkte x des Templates T möglichst exakt auf die entsprechenden Punkte in den aktuellen Bilddaten I bzw. in dem entsprechende aktuellen Bild überführt/abbildet.

$$W_p = sR(\alpha) + h$$

$$W_p = f(p)$$

Wobei R($\alpha$) eine Rotationsmatrix zur Rotation $\alpha$ und h eine translatorische Bewegung (Translation) in horizontaler Richtung $x_h$ und in vertikaler Richtung $x_v$ ist, $h = \begin{pmatrix} \Delta x_h \\ \Delta x_v \end{pmatrix}$.

Dabei ist das Funktional E(p) zu minimieren, wobei x alle Bildpunkte des Templates T durchläuft.

$$E(p) = \sum_x \left| I\left(W_p(x) - T(x)\right) \right|^2$$

Da die Änderungen zwischen zwei aufeinanderfolgenden Bildern bzw. aufeinanderfolgenden Bilddaten I einer Videosequenz nur gering sind, kann das Optimierungsproblem iterativ über eine Taylor-Entwicklung und eine Ausgleichsrechnung über alle Bildpunkte mittels eines einfachen Gauß-Newton oder Newton-Raphson Abstiegsverfahrens gelöst werden. Jede Iteration des Lucas-Kanade-Verfahrens liefert somit die Änderung $\Delta p$ des Parametervektors p mit dem der Wert des Funktionals E(p) verkleinert wird. Die Iteration läuft so lange, bis das obengenannte Abbruchkriterium (minimale Fehlerreduktion $\Delta E_{min}$ und/oder minimale Änderung $\Delta p_{min}$ und/oder maximale Zeitdauer Tmax) erfüllt ist.

Startpunkt des Verfahrens für das zweite Bild/die zweiten Bilddaten I (aus dem ersten Bild kann beispielsweise das Template T "ausgestanzt" werden), ist der Parametervektor $p_0$.

$$p_0 = \begin{pmatrix} x_{TL,h} \\ x_{TL,v} \\ 0 \\ 1 \end{pmatrix}$$

Dabei kann die Anfangstranslation $h_0$ beispielsweise der linken oberen Ecke des ausgetanzten Templates T

$$h_0 = \begin{pmatrix} x_{TL,h} \\ x_{TL,v} \end{pmatrix}.$$

entsprechen, Für jedes neue Bild ist es der Ergebnis-Parameter-Vektor des letzten Bildes.

Startpunkt des Verfahrens für alle folgenden Bilder/Bilddaten I aller folgenden Bildtakte der vordefinierten Bildtaktrate $f_B$ ist der (finale) geschätzte Parametervektor p aus dem vorherigen Bildtakt.

Im Schritt f) wird in jedem Bildtakt der vordefinierten Bildtaktrate $f_B$ die Entfernungskorrektur $\Delta D$ für den nächsten Bildtakt berechnet. Um die Zahl der benötigten Iteration in dem Lucas-Kanade-Verfahrenen (zu jedem Bildtakt) für ein zufriedenstellendes Optimierungsergebnis des Parametervektors p zu reduzieren, wird Vorwissen über den Abstand zum Ziel, z. B. aus einer aufintegrierten Inertialmessung, auf die zuletzt geschätzte Skale $s_{alt}$ bzw. $s_{t-k}$ vorab aufgebracht. Dabei werden die Zielabstände aus den Inertialmessungen $D^{IM}$ zu den Skalen s des Lucas-Kanade-Verfahrens in Bezug gesetzt. Dies geschieht basierend auf dem Verhältnis von aktueller inertialer Entfernungsschätzung $D^{IM}_{neu}$ bzw. $D^{IM}_t$ zu vorheriger inertialer Entfernungsschätzung $D^{IM}_{alt}$ bzw. $D^{IM}_{t-k}$ und dem Verhältnis von aktueller Skale $s_{neu}$ bzw. $s_t$ zu vorheriger Skale $s_{alt}$:

$$\frac{s_{neu}}{s_{alt}} = \frac{D_{alt}}{D_{neu}} \overset{\text{def}}{=} \frac{D^{IM}_{alt} + \Delta D}{D^{IM}_{neu} + \Delta D}$$

Die aktuelle Skale $s_{neu}$ ist die Skale des in diesem Bildtakt im Schritt d) berechneten Parametervektors p. Die vorherige Skale $s_{alt}$ ist die Skale des im vorherigen Bildtakt im Schritt d) berechneten Parametervektors $p_{alt}$ bzw. pt-k. Die aktuelle inertiale Entfernungsschätzung $D^{IM}_{neu}$ ist die in diesem Bildtakt empfangene inertiale Entfernungsschätzung. Die vorherige inertiale Entfernungsschätzung $D^{IM}_{alt}$ ist die im vorherigen Bildtakt empfangene inertiale Entfernungsschätzung. $D_{alt}$ bezeichnet die vorherige tatsächliche Entfernung zum Ziel und Dneu bezeichnet die aktuelle tatsächliche Entfernung zum Ziel.

Basierend darauf berechnet sich die Entfernungskorrektur $\Delta D$, die die "fehlerhaften", aus Inertialmessungen aufintegrierten Entfernungen (=Inertialmessungen) $D^{IM}$ exakt korrigiert, wie folgt:

$$\Delta D = \frac{s_{neu} D^{IM}_{neu} - s_{alt} D^{IM}_{alt}}{s_{alt} - s_{neu}}$$

Mittels der berechneten Entfernungskorrektur $\Delta D$ wird der Startparametervektor p* und insbesondere die Skale s des Startparametervektors p* im nächsten Bildtakt im Schritt c) mittels folgender Formel vorskaliert:

$$s_{neu} = \frac{D_{alt}^{IM} + \Delta D}{D_{neu}^{IM} + \Delta D} s_{alt}$$

Somit wird die nötige Anzahl an Iterationen des Lucas-Kanade-Verfahrens, die notwendig sind, um einen ausreichend genauen geschätzten Parametervektor p zu finden, deutlich reduziert. Die Reduktion der benötigten Anzahl an Iterationen für die Erfüllung des Abbruchkriteriums (siehe oben) in dem iterativen Lucas-Kanade-Verfahren bedeutet umgekehrt, dass in der erlaubten Rechenzeit ($T_{max} \leq 1/f_B$) das Abbruchkriterium verschärft werden kann (z. B. der tolerierte Restfehler reduziert), was die Anzahl der benötigten Iterationen zwar wieder erhöht, aber die Qualität des Schätzergebnisses verbessert.

Das zugrundeliegende Lucas-Kanade-Verfahren (Schritt d)) ist ein iteratives Optimierungsverfahren, bei dem gerade die (zusätzliche) Schätzung der Skale s viele Iterationen und damit Rechenzeit benötigt. Indem die bekannte, möglichst genau geschätzte Skalenänderung im Zuge der Vorskalierung in das eigentliche Trackverfahren (Lucas-Kanade-Verfahren) eingebracht wird, kann die Anzahl der nötigen Iterationen deutlich reduziert werden. Diese genaue Skalenänderung/Vorskalierung erfordert wiederum die präzise Entfernungsschätzung durch Berechnung der Entfernungskorrektur $\Delta D$. Die so geschätzte Skale s wird zur Korrektur der inertialbasierten Entfernungsschätzung $D^{IM}$ im nachfolgenden Bildtakt verwendet, was insbesondere bei bewegten Zielen zu erheblichen Verbesserungen führt.

Im Schritt h) wird zur Zielführung des Flugkörpers in jedem Bildtakt der vordefinierten Bildtaktrate $f_B$ der Flugkörper basierend auf dem verbesserten Zielhaltepunkt geregelt. Insbesondere kann eine Differenz zu einem Regelpunkt bestimmt und auf Basis dieser Differenz der Flugkörper navigiert bzw. gesteuert werden. Dazu können Steuerungskommandos an einen oder mehrere Stellmechanismen des Flugkörpers zur Betätigung von einem oder mehreren aerodynamischen Steuerungsmitteln (z. B. Klappen an Winglets oder an Flügeln) und zusätzlich oder alternativ an einen oder mehrere Antriebe (z. B. Strahltriebwerk, Propeller usw.) des Flugkörpers übertragen werden. Die Steuerkommandos werden aus dem geschätzten Parametervektor p abgeleitet.

Das computerlesbare Medium kann ein Datenspeicher wie ein magnetischer Speicher (z. B. Magnetkernspeicher, Magnetband, Magnetkarte, Magnetstreifen, Magnetblasenspeicher, Trommelspeicher, Festplattenlaufwerk, Diskette oder Wechselplatte), ein optischer Speicher (z. B. holografischer Speicher, optisches band, TesaFilm, Laserdisc, Phasewriter (Phasewriter Dual, PD), Compact Disc (CD), Digital Video Disc (DVD), High Definition DVD (HD DVD), Blu-ray Disc (BD) oder Ultra Density Optical (UDO)), ein magneto-optischer Speicher (z. B. MiniDisc oder Magneto-Optical Disk (MO-Disk)), ein flüchtiger Halbleiterspeicher (z. B. Random Access Memory (RAM), Dynamic RAM (DRAM) oder Static RAM (SRAM)), ein nicht-flüchtiger Halbleiterspeicher (z. B. Read Only Memory (ROM), Programmable ROM (PROM), Erasable PROM (EPROM), Electrically EPROM (EEPROM), Flash-EEPROM (e.g. USB-Stick), Ferroelectric RAM (FRAM), Magnetoresistive RAM (MRAM) oder Phase-change RAM) oder ein Datenträger bzw. Speichermedium sein.

Die Vorrichtung zur Datenverarbeitung kann beispielsweise (Personal-)Computer (PC), Mikrocontroller ($\mu$C), integrierte Schaltungen, anwendungsspezifische integrierte Schaltungen (Application-Specific Integrated Circuit, ASIC), anwendungsspezifisches Standardprodukte (Application-Specific Standard Products, ASSP), digitale Signalprozessoren (DSP), im Feld programmierbare (Logik-)Gatter-Anordnungen (Field Programmable Gate Arrays, FPGA) und dergleichen umfassen. Die Vorrichtung zur Datenverarbeitung kann kommunikativ (kabelgebunden, z. B. Bussystem, oder kabellos, z. B. Funkverbindung) mit einer Steuereinheit des Flugkörpers verbunden sein. Insbesondere können die Vorrichtung zur Datenverarbeitung und die Steuereinheit des Flugkörpers als eine gemeinsame Vorrichtung des Flugkörpers ausgeführt sein.

Der Flugkörper kann beispielsweise ein Flugzeug, das automatisiert gesteuert werden kann, eine Drohne, eine Lenkrakete, ein lenkbares Geschoss und dergleichen sein.

Die Kamera des Flugkörpers kann insbesondere eine IR-Kamera sein, die Infrarot-(IR-)Bilder des Zielgebiets und des Ziels bzw. des Zielhaltepunkts liefert. Die Kamera ist mit der Vorrichtung zur Datenverarbeitung kommunikativ verbunden (kabelgebunden, Datenbus, VGA-Kabel, usw., oder kabellos, z. B. Bluetooth, Zigbee, usw.). Ferner kann der Flugkörper einen oder mehrere Stellmechanismen und zusätzlich oder alternativ einen oder mehreren Antriebe umfassen. Die einen oder mehrere Stellmechanismen können ein oder mehrere aerodynamische Steuerungsmitteln des Flugkörpers verstellen (z. B. Klappen an Winglets oder an Flügeln). Der Flugkörper kann zudem eine Steuereinheit umfassen, die ausgebildet ist, die einen oder mehrere Stellmechanismen und zusätzlich oder alternativ die einen oder mehreren Antriebe des Flugkörpers und somit dessen Flugbahn zu steuern. Die Vorrichtung zur Datenverarbeitung überträgt an die Steuereinheit den verbesserten Zielhaltepunkt. Basierend auf dem verbesserten Zielhaltepunkt steuert die Steuereinheit mittels Steuerkommandos die die einen oder mehrere Stellmechanismen und zusätzlich oder alternativ die einen oder mehreren Antriebe.

Das erfindungsgemäße Verfahren kann sowohl auf IR-Bilder als auch auf TV-Bilder (monochrom/farbig) angewendet werden. Der Aktivierungsabstand, also der Abstand des Flugkörpers zum Ziel, ab dem das erfindungsgemäße Verfahren gestartet wird, kann auch von der räumlichen Auflösung des Kamerasehfeldes der Kamera des Flugkörpers abhängig sein. Denn je besser die Auflösung der Kamera, desto rauschärmer ist auch die Schätzung der Skale s. Optional können die Schritte f) und c) und zusätzlich oder alternativ e) (siehe unten) bzw. die Entfernungskorrektur ΔD erst ab einem hinreichend kleinen aktuellen Zielabstand (z. B. ab ca. 600 m) (= Aktivierungsabstand) durchgeführt bzw. berechnet werden, da die Schätzung der Skale s vorher zu verrauscht ist.

Durch die Berechnung der Entfernungskorrekturen ΔD für den jeweils folgenden Bildtakt und die Vorskalierung des Startparametervektors p* bzw. insbesondere der Skale s des Startparametervektors p* basierend auf der jeweiligen, berechneten Entfernungskorrektur ΔD kann die Anzahl der nötigen Iterationen des Lucas-Kanade-Verfahrens (Schritt d)) deutlich reduziert werden. Somit wird sichergestellt, dass auch kurz vor dem Erreichen des Ziels, wenn die Skalenänderungen zwischen den einzelnen Bildtakten groß sind, das Lucas-Kanade-Verfahren dennoch innerhalb eines Bildtakts konvergiert und ein hinreichend genauer Parametervektor p geschätzt wird. Dies ermöglicht auch bei nur noch kurzer Entfernung zu dem Ziel eine exakte Zielführung basierend auf dem geschätzten Parametervektor p. Demnach besteht eine der vorliegenden Erfindung zugrunde liegende Idee darin, das Verfahren zur (bildgestützten) Zielführung bzw. Flugführung von Flugkörpern präziser zu gestalten, indem Korrekturen der geschätzten Entfernung aus den empfangenen Bildern heraus berechnet werden.

Angenommen in einer gegebenen maximalen Rechenzeit Tmax von 20 ms (Bildtakt bei vordefinierter Bildtaktrate $f_B$ = 50 Hz) seien beispielsweise maximal 30 Iterationen möglich. Die Iteration des Lucas-Kanade-Verfahrens wird jedoch abgebrochen, wenn die Fehlerreduktion $\Delta E_{min}$ für E(p) den Wert 0,001 unterschreitet, d. h. wenn für die n-te Iteration gilt:

$$\Delta E_{min} = \frac{(E_{n-1}(p) - E_n(p))}{E_{n-1}(p)} < 0,001$$

Die wahre Skalenänderung zwischen zwei aufeinanderfolgenden Bildern betrage 1%, die auf den Entfernungsschätzungen der Inertialmessung basierende Skalenänderungsschätzung betrage 0.5%.

Ohne die Vorskalierung des Startparametervektors p* werden 0.5% Skalenänderung vorab berücksichtigt. Somit müssen neben der Translation und Rotation noch 0.5% Skalenfehler iterativ mitberücksichtigt oder ausgeglichen werden. Nach 30 Iterationen bricht in diesem Beispiel das Lucas-Kanade-Verfahren mit einer Fehlerreduktion von 0.002 ab. Das Verfahren hat also die gewünschte Fehlergüte nicht ganz erreicht, liefert aber dennoch ein brauchbares Ergebnis.

Mit der vorliegenden Erfindung kann eine verbesserte Skalenänderung von beispielsweise 0,85% (statt 0,5%) durch die Vorskalierung des Startparametervektors p* mit der Entfernungskorrektur ΔD vorab ermittelt werden. Es müssen also nur noch 0,15% Skalenfehler iterativ mitberücksichtigt oder ausgeglichen werden. Hierfür sei bereits nach 16 Iterationen die gewünschte minimale Fehlerreduktion $\Delta E_{min}$ von 0,001 erreicht. Das Abbruchkriterium könnte also verringert werden, z. B. auf $\Delta E_{min}$ = 0,0005. Somit könnte mit den (hier 14) möglichen weiteren Iterationen das Schätzergebnis für die Abbildung $W_p$ bzw. den geschätzten Parametervektor p in der gleichen maximalen Rechenzeit Tmax (hier 20 ms) weiter verbessert werden.

Im Endergebnis trägt die verbesserte Schätzung der Abbildung $W_p$ wesentlich zur Stabilität des Haltepunktes bei. Insbesondere im Endanflug auf das Ziel erlaubt die verbesserte Vorskalierung eine längere und präzisere Vermessung des Haltepunktes, da aufgrund des geringen Abstands große Skalenänderungen und damit auch erhebliche Fehler durch falsche Skalenannahmen auftreten. Die Skalenfehler der inertialmessungsbasierten Entfernungsschätzung sind insbesondere bei sich bewegenden Zielobjekten aus zwei Gründen groß: Zum einen vergeht zwischen der Entfernungsmessung vor Start/Abschuss und dem eigentlichen Start/Abschuss Zeit, in der sich das Ziel bewegt. Zum anderen wird die Bewegung des Ziels während des Fluges durch die Inertialmessung nicht erfasst. Geht man beispielsweise von einer Gesamtzeitdifferenz von 15s zwischen der anfänglichen Entfernungsmessung und dem theoretischen Erreichen des Ziels durch den Flugkörper aus, so würde eine lineare Bewegung des Zieles von 36 km/h in Richtung des Flugkörpers eine Entfernungsdifferenz von 150 m ausmachen. Nach 13 s wäre die Differenz bereits 130 m, was bei einem angenommenen Zielrestabstand von 360 m für ein bewegtes Ziel einen Gesamtskalenfehler von 360 m / 230 m - 1 ~ 56,6% bedeutet. Bildweise betrachtet sieht der Fehler zu diesem Zeitpunkt wie folgt aus:

Angenommene Bewegung pro Bild ist 360 m / 2 s = 3,6 m / Bildtakt
Inertiale Skalenschätzung (Bild zu Bild): 360 m / 356.4 m - 1 = 1,01%
Verbesserte Schätzung (Bild zu Bild): 230 m / 226.4 m - 1 = 1,59%
Die iterativ zu schätzende Skale ohne die verbesserte Vorskalierung beträgt somit 0,58 %.

Vorteilhafte Ausgestaltungen und Weiterbildungen ergeben sich aus den weiteren Unteransprüchen sowie aus der Beschreibung unter Bezugnahme auf die Figuren.

Es kann vorgesehen sein, dass das Verfahren ferner folgenden Schritt umfasst:

e) Pro Bildtakt der vordefinierten Bildtaktrate $f_B$, Ausgleichen von Helligkeitsunterschieden zwischen dem Template T und den mit der Abbildung $W_p$ skalierten Bilddaten I mittels eines Offsets und optional eines Skalierungsfaktors für den nächsten Bildtakt.

Der Ausdruck zur Berechnung von ΔD (siehe oben) ist für sehr kleine reale Skalenänderungen - sprich bei großen Entfernungen - numerisch instabil. Kleine Schätzfehler für die Skalen können somit extrem große Korrekturen liefern. Um dem zu begegnen werden die auftretenden Helligkeitsunterschiede zwischen dem Template T und den mit der Abbildung $W_p$ skalierten Bilddaten I ausgeglichen. Dadurch wird das Differenzbild, das in die Ausgleichsrechnung für die geometrischen Abbildungsparameter der Abbildung/des Warp $W_p$ eingeht, frei von Helligkeitseinflüssen gehalten (es geht nur die "Zielstruktur" ein).

Um die Skale s hinreichend genau schätzen zu können, wird somit ein Helligkeitsausgleich (Offset und Gain zwischen Template T und Bild) in das Verfahren integriert. Durch den Helligkeitsausgleich kann mit dem erfindungsgemäßen Verfahren die Skalenänderung noch besser geschätzt und mit der so geschätzten Skalenänderung die inertialbasierte Entfernungsschätzung $D^{IM}$ erheblich verbessert werden. Dadurch erhöht sich die Trefferpräzision, insbesondere da somit bis kurz vor dem Ziel erfolgreich getrackt = (das Lucas-Kanade-Verfahren bis zum Erreichen das Gütekriteriums ($\Delta E_{min}$, $\Delta p_{min}$) in jedem Bildtakt durchgeführt) werden kann.

Ferner kann vorgesehen sein, dass die Schritte f) und c) und/oder e) erst durchgeführt werden, wenn Ände-

$$\frac{s_{neu}}{s_{alt}} - 1 > S,$$

rungen der Skale s signifikant werden, insbesondere wenn gilt $\quad$ wobei S ein vordefinierter Schwellwert ist.

Dies trägt ebenfalls zur numerischen Stabilität des erfindungsgemäßen Verfahrens bei.

Ferner kann vorgesehen sein, dass das Verfahren ferner folgenden Schritt umfasst:

g) skalengesteuertes Auswählen eines das Template T ersetzenden Ausschnitts in den aktuellen Bilddaten I als neues Template T für den nächsten Bildtakt.

Der Schritt g) kann optional pro Bildtakt der vordefinierten Bildtaktrate $f_B$ oder jeweils nach einer vordefinierten Anzahl von Bildtakten durchgeführt werden.

Dieses Resampling des Templates T, insbesondere bei hinreichend großer Gesamtskale $s_{ges}$ des Warps $W_p$ verbessert zudem die benötigte Rechenzeit und erhöht die Güte des geschätzten Warps $W_p$ bzw. des geschätzten Parametervektors p. Die Skale s führt dazu, dass die betrachteten Bildpunkte $W_p(x)$ immer weiter auseinandergezogen werden, so dass das reale Ziel im aktuellen Bild/in den aktuellen Bilddaten I immer gröber abgetastet wird; die Abtastung auf dem Template T ist immer konstant ein Bildpunkt, während sie auf dem gewarpten Bild s Bildpunkte beträgt. Ein "Resampling" durch erneutes Ausstanzen der Haltepunktumgebung im neuen Bild erhöht die Auflösung des Ziel-Abbildes und stabilisiert das gesamte Verfahren. Mit anderen Worten, um die Auflösung des Ziels auf dem Template T zu verfeinern wird, insbesondere abhängig von der Skale s, immer wieder ein Resampling des Templates T durchgeführt, das auch die Skalenschätzung in der Folge zuverlässiger macht. Die vier Parameter des Parametervektors p müssen bei dem

$$p_0 = \begin{pmatrix} x_{TL,h} \\ x_{TL,v} \\ 0 \\ 1 \end{pmatrix}$$

genannten Resampling durch Ausstanzen entsprechend zurückgesetzt werden auf $\quad$ (wie beim Start des Verfahrens, siehe oben). Zusätzlich müssen die Werte des Skalenpuffers ($s_{alt}$) durch den zuletzt errechneten Skalenwert s dividiert werden. Danach läuft das Verfahren ganz wie zuvor weiter.

Ferner kann vorgesehen sein, dass in dem Schritt f) ein Intervall der Größe N betrachtet wird und zur Berechnung der Entfernungskorrektur ΔD Mittelwerte über eine vordefinierte Anzahl M an Skalen s an den jeweiligen Intervallenden verwendet werden.

Das Verfahren zur Schätzung einer Entfernungskorrektur betrachtet die Entwicklung der Skalenschätzung über mehrere Bilder bzw. Bilddaten I der Vergangenheit und ermittelt aus hieraus gefilterten Stützwerten einen aktuellen Korrekturwert für die Zielentfernung (ggü. der inertialen Entfernungsschätzung $D^{IM}$). Dieser Korrekturwert wird nochmals zeitlich gefiltert, bevor er als finale Entfernungskorrektur in das Trackverfahren zurückgekoppelt wird. Dabei werden eben nicht nur zwei aufeinanderfolgende Bilder/Sätze an Bilddaten I betrachtet, sondern ein Intervall von N Bildern. Zusätzlich werden die Skalen s an den Intervallenden noch gefiltert, indem z. B. die Mittelwerte über M Skalenwerte gebildet werden. Für M = 2*k+1 lautet die Korrekturformel für ein Bild zum Zeitpunkt t dann z. B.:

$$\Delta D_t = \frac{\left(\frac{1}{M} \sum_{i=-k}^{k} s_{t-N+k+i}\right) * D_{t-N+k}^{IM} - \left(\frac{1}{M} \sum_{i=-k}^{k} s_{t-k+i}\right) * D_{t-k}^{IM}}{s_{t-N+k} - s_{t-k}}$$

Ferner kann vorgesehen sein, dass in dem Schritt f) zusätzlich ein Lernfilter angewendet wird.

Um den Korrekturwert weiter vor gelegentlichen Ausreißern von Einzelschätzungen zu schützen, wird das Lernfilter eingebaut. Der effektive Korrekturwert zum Zeitpunkt t wird hierfür wie folgt berechnet:

$$\Delta D_{eff,t} = (1 - \alpha) \Delta D_{eff,t-1} + a\Delta D_t$$

Wobei $\alpha \in ]0,0.5]$.

Ziel all der zuvor genannten Maßnahmen soll sein, das Korrekturschätzverfahren so früh wie möglich bzw. sinnvoll einzusetzen, um schnellst möglich die Zahl der Iterationen des Lucas-Kanade-Verfahrens zu reduzieren. Die konkrete Parametrierung hängt dabei wesentlich von der Bildqualität und der Bildpunktauflösung ab.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

Die vorliegende Erfindung wird nachfolgend anhand der in den schematischen Figuren angegebenen Ausführungsbeispiele näher erläutert. Es zeigen dabei:

Fig. 1    ein schematisches Ablaufdiagramm eines computer-implementierten Verfahrens zur Zielführung von Flugkörpern;

Fig. 2    eine schematische Darstellung eines computerlesbaren Mediums;

Fig. 3    eine schematische Darstellung einer Vorrichtung zur Datenverarbeitung; und

Fig. 4    eine schematische Seitenansicht eines Flugkörpers.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

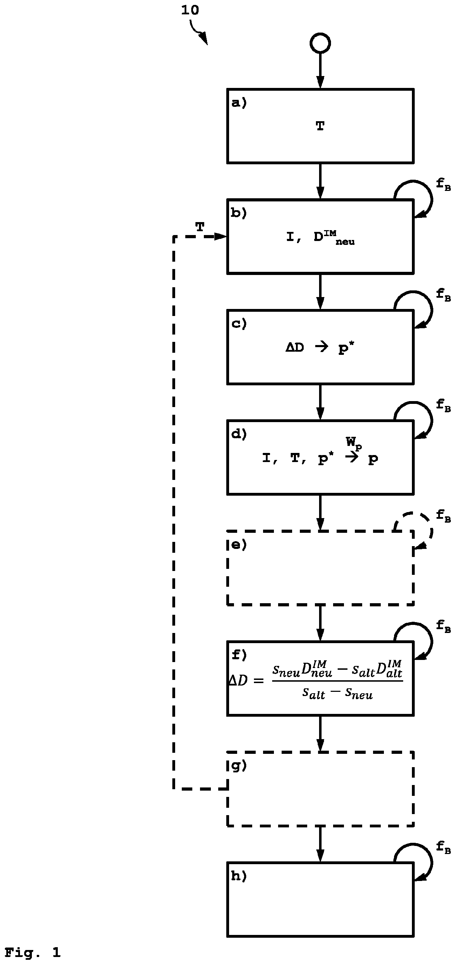

Fig. 1 zeigt ein schematisches Ablaufdiagramm eines computer-implementierten Verfahrens 10 zur Zielführung von Flugkörpern. Das computer-implementierte Verfahren 10 umfasst die folgenden Schritte:

a) Einmaliges Empfangen eines Templates T einschließlich eines Zielhaltepunkts vor dem Abflug eines Flugkörpers.

b) Wiederholtes Empfangen von Bilddaten I einer Kamera des Flugkörpers und von inertialen Entfernungsschätzungen $D^{IM}$ aus einer Inertialmessung während des Flugs des Flugkörpers mit einer vordefinierten Bildtaktrate $f_B$.

c) Pro Bildtakt der vordefinierten Bildtaktrate $f_B$ Berechnen eines vorskalierten Startparametervektors p* für diesen Bildtakt unter Verwendung einer zuletzt berechneten Entfernungskorrektur $\Delta D$.

d) Pro Bildtakt der vordefinierten Bildtaktrate $f_B$ Durchführen eines iterativen Lucas-Kanade-Verfahrens zur Berechnung eines geschätzten Parametervektors p einschließlich einer aktuellen Skale $s_{neu}$ basierend auf den aktuellen Bilddaten I und dem Template T ausgehend von dem berechneten vorskalierten Startparametervektor p* mittels einer Abbildung $W_p$, wobei der Zielhaltepunkt mittels der Abbildung $W_p$ unter Verwendung des geschätzten Parametervektors p verbessert wird.

e) Pro Bildtakt der vordefinierten Bildtaktrate $f_B$, Ausgleichen von Helligkeitsunterschieden zwischen dem Template T und den mit der Abbildung $W_p$ skalierten Bilddaten I mittels eines Offsets und optional eines Skalierungsfaktors für den nächsten Bildtakt.

f) Pro Bildtakt der vordefinierten Bildtaktrate $f_B$ Berechnen einer Entfernungskorrektur $\Delta D$ für den nächsten Bildtakt aus einer aktuellen Skale $s_{neu}$, einer vorherigen Skale $s_{alt}$, einer aktuellen inertialen Entfernungsschätzung $D^{IM}_{neu}$ und einer vorherigen inertialen Entfernungsschätzung $D^{IM}_{alt}$.

g) skalengesteuertes Auswählen eines das Template T ersetzenden Ausschnitts in den aktuellen Bilddaten I als neues Template T für den nächsten Bildtakt.

h) Pro Bildtakt der vordefinierten Bildtaktrate $f_B$ Regeln des Flugkörpers zur Zielführung des Flugkörpers basierend auf dem verbesserten Zielhaltepunkt.

Im Schritt a) werden das Template T und der Zielhaltepunkt, zu welchem der Flugkörper hin gesteuert werden soll, empfangen. Das zu treffende Ziel wird durch das Template (Signatur), also einen Bildausschnitt aus wenigstens einem Bild eines Zielgebiets, auf dem das zu erreichende Ziel wenigstens teilweise oder vollständig abgebildet ist, beschrieben. Das Bild des Zielgebiets wurde von einer IR-Kamera des Flugkörpers aufgenommen und an ein Kontrollsystem übertragen. Das Template kann automatisch oder durch einen Benutzer ("von Hand") in dem Bild des Zielgebiets ausgewählt bzw. "ausgeschnitten" worden sein (z. B. kann der Benutzer auf einem Bildschirm, auf dem das Bild des Zielgebiets durch das Kontrollsystem angezeigt wird, das Template des zu erreichenden Ziels auswählen, indem er das zu erreichender Ziel mittels eines Cursors, den er über eine Maus steuert, aus dem Bild des Zielgebiets "ausschneidet"). Der Haltepunkt wird in der Regel in der Mitte des Templates T gewählt.

Im Schritt b) werden wiederholt/kontinuierlich die Bilddaten I von der IR-Kamera mit der vordefinierten Bildtaktrate $f_B$ empfangen. Die IR-Kamera des Flugkörpers sendet dazu entsprechend mit der vordefinierten Bildtaktrate $f_B$ die aufgenommenen Bilddaten I des Zielgebiets, in dem sich das zu erreichende Ziel befindet. Zudem werden mit der vordefinierten Bildtaktrate $f_B$ kontinuierlich aktuelle inertiale Entfernungsschätzungen $D^{IM}_{neu}$ bzw. $D^{IM}_t$ (inertiale Entfernungsschätzung zum aktuellen Zeitpunkt bzw. Bildtakt t) empfangen. Die inertialen Entfernungsschätzungen $D^{IM}$ bzw. die Änderungen der inertialen Entfernungsschätzungen $\Delta D^{IM}$ basieren auf der bekannten Geschwindigkeit v des Flugkörpers (z. B. 300 Km/h) und der verstrichenen Zeit $\Delta t$.

$$\Delta D^{IM} = v\,\Delta t$$

Im Schritt c) wird in jedem Bildtakt der vordefinierten Bildtaktrate $f_B$ der vorskalierte Startparametervektor $p^*$ für das Lucas-Kanade-Verfahren dieses Bildtakts berechnet, indem der vorherige berechnete Parametervektor $p_{alt}$ bzw. $p_{t-k}$ (k gleich 1 oder mehr Bildtakte) durch Korrigieren/Vorskalieren der Skale s des vorherigen berechneten Parametervektors $p_{alt}$ mittels der zuletzt berechneten Entfernungskorrektur $\Delta D$ angepasst.

Im Schritt d) wird das empfangene Template T in jedem Bildtakt mit dem Lucas-Kanade-Verfahren (automatisierte Zielverfolgung/Tracker des Lucas-Kanade-Typs) mit dem vier-parametrige Parametervektor p verfolgt.

$$p = \begin{pmatrix} \Delta x_h \\ \Delta x_v \\ \alpha \\ s \end{pmatrix}$$

wobei $\Delta x_h$ die Translation in X-Richtung, $\Delta x_v$ die Translation in Y-Richtung, $\alpha$ die Rotation/Drehwinkel und s die Skale (Zoomfaktor) sind.

In dem Lucas-Kanade-Verfahren wird der Parametervektor p solange iterativ geschätzt/verbessert, bis eine vordefinierte minimale Fehlerreduktion $\Delta E_{min}$ für das Funktional E(p) (siehe unten) als Abbruchkriterium erfüllt ist.

$$\Delta E_{min} = \frac{(E_{n-1}(p) - E_n(p))}{E_{n-1}(p)}$$

Das Lucas-Kanade-Verfahren dazu benutzt, den vorgegebenen Zielhaltepunkt des zu erreichenden Ziels möglichst genau von Bild zu Bild zu vermessen. Es wird dabei in jedem Bildtakt der vordefinierten Bildtaktrate $f_B$ der Zielhaltepunkt mittels der Abbildung $W_p$ unter Verwendung des (iterativ) geschätzten Parametervektors p verbessert, indem das Template T in den aktuellen Bilddaten I des aktuellen Bildtakts gesucht und basierend darauf der Parametervektor p iterativ geschätzt wird. Der Haltepunkt wird über die Abbildung (Warp) $W_p$ nach der jeweiligen Schätzung des Parametervektors p auf die aktuellen Bilddaten I, d.h. das aktuelle Bild abgebildet. Dort wird eine Differenz zu einem Regelpunkt bestimmt und auf Basis dieser Differenz der Flugkörper navigiert/gesteuert (Schritt h)). Dabei wird der vier-parametrige Parametervektor p solange iterativ geschätzt/verändert, bis die Abbildung $W_p$ die Punkte x des Templates T möglichst exakt auf die entsprechenden Punkte in den aktuellen Bilddaten I überführt/abbildet.

$$W_p = sR(\alpha) + h$$

$$W_p = f(p)$$

wobei R($\alpha$) eine Rotationsmatrix zur Rotation $\alpha$ und h eine translatorische Bewegung (Translation) in horizontaler Richtung $x_h$ und in vertikaler Richtung $x_v$ ist, $h = \begin{pmatrix} \Delta x_h \\ \Delta x_v \end{pmatrix}$.

Dabei ist das Funktional E(p) zu minimieren, wobei x alle Bildpunkte des Templates T durchläuft.

$$E(p) = \sum_x \left| I\left(W_p(x) - T(x)\right) \right|^2$$

Da die Änderungen zwischen zwei aufeinanderfolgenden Bilddaten I einer Videosequenz nur gering sind, wird das Optimierungsproblem iterativ über eine Taylor-Entwicklung und eine Ausgleichsrechnung über alle Bildpunkte mittels eines einfachen Gauß-Newton oder Newton-Raphson Abstiegsverfahrens gelöst. Die Iteration läuft so lange, bis die vordefinierte minimale Fehlerreduktion $\Delta E_{min}$ als Abbruchkriterium erfüllt ist.

Startpunkt des Verfahrens für die zweiten Bilddaten I (aus dem ersten Bild wird das Template T "ausgestanzt"), ist der Parametervektor $p_0$.

$$p_0 = \begin{pmatrix} x_{TL,h} \\ x_{TL,v} \\ 0 \\ 1 \end{pmatrix}$$

Die Anfangstranslation $h_0$ entspricht dabei der linken oberen Ecke des ausgetanzten Templates T, $h_0 = \begin{pmatrix} x_{TL,h} \\ x_{TL,v} \end{pmatrix}$. Für jedes neue Bild ist es der Ergebnis-Parameter-Vektor des letzten Bildes.

Startpunkt des Verfahrens für alle folgenden Bilder/Bilddaten I aller folgenden Bildtakte der vordefinierten Bildtaktrate $f_B$ ist der (finale) geschätzte Parametervektor p aus dem vorherigen Bildtakt.

Im Schritt e) werden Helligkeitsunterschiede zwischen dem Template T und den mit der Abbildung $W_p$ skalierten Bilddaten I mittels eines Offsets und eines Skalierungsfaktors (Gain) für den nächsten Bildtakt ausgeglichen. Dadurch wird das Differenzbild, das in die Ausgleichsrechnung für die geometrischen Abbildungsparameter der Abbildung $W_p$ eingeht, frei von Helligkeitseinflüssen gehalten (es geht nur die "Zielstruktur" ein), da der Ausdruck zur Berechnung von $\Delta D$ (siehe oben) für sehr kleine reale Skalenänderungen (bei großen Entfernungen) numerisch instabil ist und somit kleine Schätzfehler für die Skalen zu extrem großen Korrekturen führen können. Durch den Helligkeitsausgleich wird die Skalenänderung noch besser geschätzt und dadurch die inertialbasierte Entfernungsschätzung $D^{IM}$ erheblich verbessert.

Im Schritt f) wird in jedem Bildtakt der vordefinierten Bildtaktrate $f_B$ die Entfernungskorrektur $\Delta D$ für den nächsten Bildtakt berechnet. Um die Zahl der benötigten Iteration in dem Lucas-Kanade-Verfahrenen zu jedem Bildtakt zu reduzieren, wird Vorwissen über den Abstand zum Ziel auf die zuletzt geschätzte Skale $s_{alt}$ bzw. $s_{t-k}$ vorab aufgebracht. Dabei werden die Zielabstände aus den Inertialmessungen $D^{IM}$ zu den Skalen s des Lucas-Kanade-Verfahrens in Bezug gesetzt. Dies geschieht basierend auf dem Verhältnis von aktueller inertialer Entfernungsschätzung $D^{IM}_{neu}$ bzw. $D^{IM}_t$ zu vorheriger inertialer Entfernungsschätzung $D^{IM}_{alt}$ bzw. $D^{IM}_{t-k}$ und dem Verhältnis von aktueller Skale $s_{neu}$ bzw. st zu vorheriger Skale $s_{alt}$:

$$\frac{s_{neu}}{s_{alt}} = \frac{D_{alt}}{D_{neu}} \stackrel{\text{def}}{=} \frac{D^{IM}_{alt} + \Delta D}{D^{IM}_{neu} + \Delta D}$$

Die aktuelle Skale $s_{neu}$ ist die Skale des in diesem Bildtakt im Schritt d) berechneten Parametervektors p. Die

vorherige Skale $s_{alt}$ ist die Skale des im vorherigen Bildtakt im Schritt d) berechneten Parametervektors $p_{alt}$ bzw. pt-k. Die aktuelle inertiale Entfernungsschätzung $D^{IM}_{neu}$ ist die in diesem Bildtakt empfangene inertiale Entfernungsschätzung. Die vorherige inertiale Entfernungsschätzung $D^{IM}_{alt}$ ist die im vorherigen Bildtakt empfangene inertiale Entfernungsschätzung. $D_{alt}$ bezeichnet die vorherige tatsächliche Entfernung zum Ziel und Dneu bezeichnet die aktuelle tatsächliche Entfernung zum Ziel.

Basierend darauf berechnet sich die Entfernungskorrektur ΔD, die die "fehlerhaften", aus Inertialmessungen aufintegrierten Entfernungen (=Inertialmessungen) $D^{IM}$ exakt korrigiert, wie folgt:

$$\Delta D = \frac{s_{neu} D^{IM}_{neu} - s_{alt} D^{IM}_{alt}}{s_{alt} - s_{neu}}$$

Mittels der berechneten Entfernungskorrektur ΔD wird der Startparametervektor p* und insbesondere die Skale s des Startparametervektors p* im nächsten Bildtakt im Schritt c) mittels folgender Formel vorskaliert:

$$s_{neu} = \frac{D^{IM}_{alt} + \Delta D}{D^{IM}_{neu} + \Delta D} s_{alt}$$

Somit wird die nötige Anzahl an Iterationen des Lucas-Kanade-Verfahrens, die notwendig sind um einen ausreichend genauen geschätzten Parametervektor p zu finden, deutlich reduziert. Indem die bekannte, möglichst genau geschätzte Skalenänderung im Zuge der Vorskalierung in das eigentliche Trackverfahren (Lucas-Kanade-Verfahren) eingebracht wird, kann die Anzahl der nötigen Iterationen deutlich reduziert werden. Diese genaue Skalenänderung/Vorskalierung erfordert wiederum die präzise Entfernungsschätzung durch Berechnung der Entfernungskorrektur ΔD. Die so geschätzte Skale s wird zur Korrektur der inertialbasierten Entfernungsschätzung $D^{IM}$ im nachfolgenden Bildtakt verwendet, was insbesondere bei bewegten Zielen zu erheblichen Verbesserungen führt.

Weiter ist vorgesehen, dass in dem Schritt f) ein Intervall der Größe N betrachtet wird und zur Berechnung der Entfernungskorrektur ΔD Mittelwerte über eine vordefinierte Anzahl M an Skalen s an den jeweiligen Intervallenden verwendet werden. Für M = 2*k+1 lautet die Korrekturformel für ein Bild zum Zeitpunkt t:

$$\Delta D_t = \frac{\left({}^1\!/_M \sum_{i=-k}^{k} s_{t-N+k+i}\right) * D^{IM}_{t-N+k} - \left({}^1\!/_M \sum_{i=-k}^{k} s_{t-k+i}\right) * D^{IM}_{t-k}}{s_{t-N+k} - s_{t-k}}$$

Ferner ist vorgesehen, dass in dem Schritt f) zusätzlich ein Lernfilter angewendet wird, um den Korrekturwert weiter vor gelegentlichen Ausreißern von Einzelschätzungen zu schützen. Der effektive Korrekturwert zum Zeitpunkt t wird hierfür wie folgt berechnet:

$$\Delta D_{eff,t} = (1 - \alpha)\, \Delta D_{eff,t-1} + a\Delta D_t$$

Wobei $\alpha \in\ ]0,0.5]$.

Ziel all der zuvor genannten Maßnahmen soll sein, das Korrekturschätzverfahren so früh wie möglich bzw. sinnvoll einzusetzen, um schnellst möglich die Zahl der Iterationen des Lucas-Kanade-Verfahrens zu reduzieren. Die konkrete Parametrierung hängt dabei wesentlich von der Bildqualität und der Bildpunktauflösung ab.

Zudem ist vorgesehen, dass die Schritte c), e) und f) erst durchgeführt werden, wenn gilt $\frac{s_{neu}}{s_{alt}} - 1 > S,$ wobei S ein vordefinierter Schwellwert ist (Änderungen der Skale s werden signifikant). Dies trägt ebenfalls zur numerischen Stabilität des Verfahrens bei.

Im Schritt g) wird ein das Template T ersetzender Ausschnitt in den aktuellen Bilddaten I als neues Template T für den nächsten Bildtakt skalengesteuert ausgewählt (Resampling), um die Auflösung des Ziels auf dem Template T zu verfeinern. Insbesondere abhängig von der Skale s wird immer wieder ein Resampling des Templates T durchgeführt, das auch die Skalenschätzung in der Folge zuverlässiger macht. Die vier Parameter des Parametervektors p müssen bei dem genannten Resampling durch Ausstanzen entsprechend zurückgesetzt werden auf $p_0 = \begin{pmatrix} x_{TL,h} \\ x_{TL,v} \\ 0 \\ 1 \end{pmatrix}$ (wie beim Start des Verfahrens, siehe oben). Zusätzlich müssen die Werte des Skalenpuffers ($s_{alt}$) durch den zuletzt errechneten Skalenwert s dividiert werden.

Im Schritt h) wird zur Zielführung des Flugkörpers in jedem Bildtakt der vordefinierten Bildtaktrate $f_B$ der Flugkörper basierend auf dem verbesserten Zielhaltepunkt geregelt, indem eine Differenz zu einem Regelpunkt bestimmt und auf Basis dieser Differenz der Flugkörper navigiert/gesteuert wird. Dazu werden Steuerungskommandos an Stellmechanismen des Flugkörpers zur Betätigung von aerodynamischen Steuerungsmitteln (Klappen an Winglets/Flügeln) und an Antriebe (z. B. Strahltriebwerk, Propeller usw.) des Flugkörpers übertragen. Die Steuerkommandos werden aus dem geschätzten Parametervektor p abgeleitet.

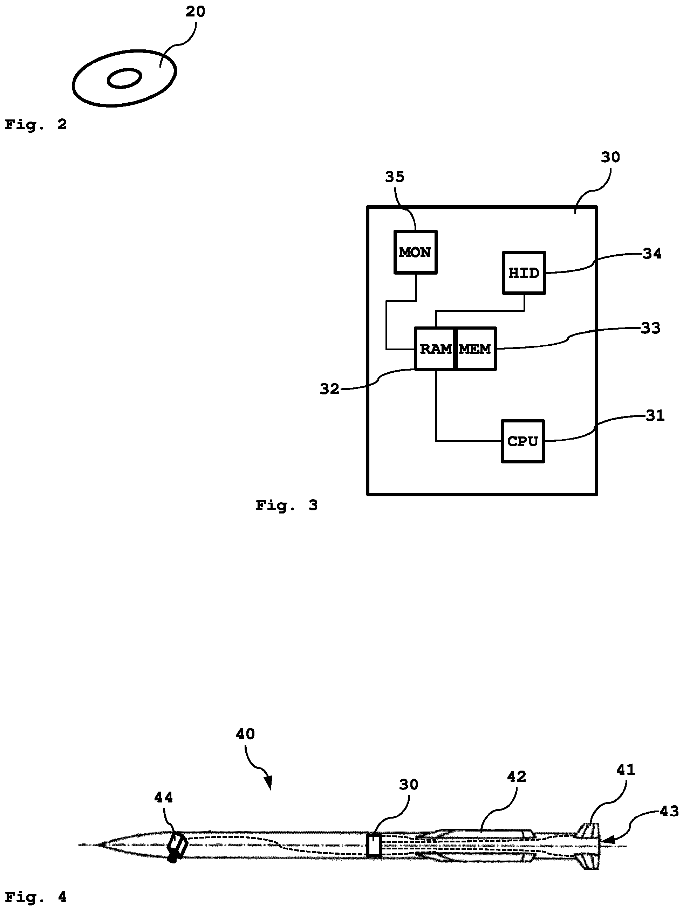

Fig. 2 zeigt eine schematische Darstellung eines computerlesbaren Mediums 20.

Auf dem computerlesbaren Medium ist ein Computerprogramm gespeichert, das Befehle umfasst, die bei der Ausführung des Programms durch einen Computer diesen veranlassen, die Schritte des computer-implementierten Verfahrens zur (bildgestützten) Zielführung bzw. Flugführung von Flugkörpern gemäß Fig. 1 auszuführen. Hier ist beispielhaft auf einer computerlesbaren Speicherplatte 20 wie einer Compact Disc (CD), Digital Video Disc (DVD), High Definition DVD (HD DVD) oder Blu-ray Disc (BD) das Computerprogramm gespeichert. Allerdings kann das computerlesbare Medium auch ein Datenspeicher wie ein Magnetspeicher (z. B. Magnetkernspeicher, Magnetband, Magnetkarte, Magnetstreifen, Magnetblasenspeicher, Rollenspeicher, Festplatte, Diskette oder Wechselspeicher), ein optischer Speicher (z. B. holographischer Speicher, optisches Band, Tesafilm, Laserdisc, Phasewriter (Phasewriter Dual, PD) oder Ultra Density Optical (UDO)), ein magneto-optischer Speicher (z. B. miniDisc oder Magneto-Optical Disk (MO-Disk)), ein flüchtiger Halbleiter-/Festkörperspeicher (z. B. Random Access Memory (RAM), Dynamic RAM (DRAM) oder Static RAM (SRAM)) oder ein nicht-flüchtiger Halbleiter-/Festkörperspeicher (z. B. Read Only Memory (ROM), Programmable ROM (PROM), Erasable PROM (EPROM), Electrically EPROM (EEPROM), Flash-EEPROM (z. B. USB-Stick), Ferroelectric RAM (FRAM), Magnetoresistive RAM (MRAM) oder Phase-change RAM) sein.

Fig. 3 zeigt eine schematische Darstellung einer Vorrichtung zur Datenverarbeitung 30.

Die Vorrichtung zur Datenverarbeitung 30 umfasst Mittel zur Ausführung des computer-implementierten Verfahrens zur (bildgestützten) Zielführung bzw. Flugführung von Flugkörpern gemäß Fig. 1 bzw. zur Ausführung des zuvor genannten Computerprogramms. Die Vorrichtung zur Datenverarbeitung (Datenverarbeitungssystem) 30 kann ein Personal Computer (PC), ein Laptop, ein Tablet, ein Server, ein verteiltes System (z. B. Cloud-System) und dergleichen sein. Das Datenverarbeitungssystem 30 umfasst eine zentrale Recheneinheit (central processing unit, CPU) 31, einen Speicher, der einen Direktzugriffsspeicher (RAM) 32 und einen nicht-flüchtigen Speicher (MEM, z. B. Festplatte) 33 aufweist, eine Mensch-Maschine-Schnittstelle (human interface device, HID, z. B. Tastatur, Maus, Touchscreen usw.) 34 und ein Ausgabegerät (MON, z. B. Monitor, Drucker, Lautsprecher usw.) 35. Die CPU 31, der RAM 32, die HID 34 und das MON 35 sind über einen Datenbus kommunikativ verbunden. Der RAM 32 und der MEM 33 sind über einen anderen Datenbus kommunikativ verbunden. Das Computerprogramm kann von dem MEM 33 oder einem anderen computerlesbaren Medium 20 in den RAM 32 geladen werden. Gemäß dem Computerprogram führt die CPU 31 die Schritte a) bis h) des computerimplementierten Verfahrens wie in Figs. 1 bis 8 schematisch dargestellt aus. Die Ausführung kann durch einen Nutzer über die HID 34 initialisiert und gesteuert werden. Der Status und/oder das Ergebnis des ausgeführten Computerprogramms kann dem Nutzer durch das MON 35 angezeigt werden. Das Ergebnis des ausgeführten Computerprogramms kann auf dem nichtflüchtigen MEM 33 oder einem anderen computerlesbaren Medium 20 permanent gespeichert werden.

Insbesondere können die CPU und der RAM 33 zum Ausführen des Computerprogramms mehrere CPUs 31 und mehrere RAMs 33, beispielsweise in einem Rechencluster oder einem Cloud-System, umfassen. Die HID 34 und das MON 35 zum Steuern der Ausführung des Computerprogramms können von einem anderen Datenverarbeitungssystem wie einem Terminal umfasst sein, das kommunikativ mit dem Datenverarbeitungssystem 30 (z. B. Cloud-System) verbunden ist.

Fig. 4 zeigt eine schematische Seitenansicht eines Flugkörpers 40.

Der Flugkörper ist hie beispielhaft eine Rakete 40, die die Vorrichtung zur Datenverarbeitung 30 gemäß Fig. 3, mehrere Winglets 41 mit Klappen, mehrere Flügel 42 mit Klappen, mehrere Antriebe 43 (z. B. Strahltriebwerk, Propeller usw.) und eine IR-Kamera 44 umfasst. Die Vorrichtung zur Datenverarbeitung 30 ist mit den Winglets 41, Flügeln 42 und Antrieben 43 kommunikativ verbunden, sodass diese basierend auf den Steuerkommandos der Vorrichtung zur Datenverarbeitung 30 zur Zielführung des Flugkörpers in jedem Bildtakt der vordefinierten Bildtaktrate $f_B$ geregelt werden. Die IR-Kamera 44 ist kommunikativ mit der Vorrichtung zur Datenverarbeitung 30 verbunden und sendet Bilddaten I während des Flugs der Rakete 40 mit der vordefinierten Bildtaktrate $f_B$ an die Vorrichtung zur Datenverarbeitung 30.

Die inertialen Entfernungsschätzungen $D^{IM}$ können von einer separaten Vorrichtung (nicht dargestellt), die mit der Vorrichtung zur Datenverarbeitung 30 kommunikativ verbunden ist, oder von der Vorrichtung zur Datenverarbeitung 30 selbst während des Flugs des Flugkörpers mit der vordefinierten Bildtaktrate $f_B$ ermittelt und übertragen/bereitgestellt werden.

Es wird wie bereits zuvor beschreiben die Differenz zu dem Regelpunkt der Rakete 40 bestimmt und auf Basis dieser Differenz die Rakete 40 navigiert/gesteuert, indem die Steuerungskommandos, die aus dem geschätzten Parametervektor p abgeleitet werden, an Stellmechanismen der Rakete 40 zur Betätigung der Klappen der Winglets 41 und der Flügel 42 und an die Antriebe 43 übertragen werden.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

**Bezugszeichenliste**

| | |
|---|---|
| 10 | computer-implementiertes Verfahren |
| 20 | computerlesbares Medium |
| 30 | Vorrichtung zur Datenverarbeitung (Datenverarbeitungssystem) |
| 31 | CPU |
| 32 | RAM |
| 33 | MEM |
| 34 | HID |
| 35 | MON |
| 40 | Rakete |
| 41 | Winglets |
| 42 | Flügel |
| 43 | Antriebe |
| 44 | IR-Kamera |

**Patentansprüche**

1. Computer-implementiertes Verfahren (10) zur Zielführung von Flugkörpern, umfassend die Schritte:

   a) einmaliges Empfangen eines Templates T einschließlich eines Zielhaltepunkts vor dem Abflug eines Flugkörpers (40);
   b) wiederholtes Empfangen von Bilddaten I einer Kamera (44) des Flugkörpers (40) und von inertialen Entfernungsschätzungen $D^{IM}_{neu}$ aus einer Inertialmessung während des Flugs des Flugkörpers (40) mit einer vordefinierten Bildtaktrate $f_B$;
   c) pro Bildtakt der vordefinierten Bildtaktrate $f_B$, Berechnen eines vorskalierten Startparametervektors p* für diesen Bildtakt unter Verwendung einer zuletzt berechneten Entfernungskorrektur $\Delta D$;
   d) pro Bildtakt der vordefinierten Bildtaktrate $f_B$, Durchführen eines iterativen Lucas-Kanade-Verfahrens zur Berechnung eines geschätzten Parametervektors p einschließlich einer aktuellen Skale $s_{neu}$ basierend auf den aktuellen Bilddaten I und dem Template T ausgehend von dem berechneten vorskalierten Startparametervektor p* mittels einer Abbildung $W_p$, wobei der Zielhaltepunkt mittels der Abbildung $W_p$ unter Verwendung des geschätzten Parametervektors p verbessert wird;
   f) pro Bildtakt der vordefinierten Bildtaktrate $f_B$, Berechnen einer Entfernungskorrektur $\Delta D$ für den nächsten

Bildtakt aus einer aktuellen Skale $s_{neu}$, einer vorherigen Skale $s_{alt}$, einer aktuellen inertialen Entfernungsschätzung $D^{IM}_{neu}$ und einer vorherigen inertialen Entfernungsschätzung $D^{IM}_{alt}$; und

h) pro Bildtakt der vordefinierten Bildtaktrate Regeln des Flugkörpers (40) zur Zielführung des Flugkörpers (40) basierend auf dem verbesserten Zielhaltepunkt.

2. Verfahren (10) gemäß Anspruch 1, ferner umfassend den Schritt:
e) pro Bildtakt der vordefinierten Bildtaktrate $f_B$, Ausgleichen von Helligkeitsunterschieden zwischen dem Template T und den mit der Abbildung $W_p$ skalierten Bilddaten I mittels eines Offsets und optional eines Skalierungsfaktors für den nächsten Bildtakt.

3. Verfahren (10) gemäß Anspruch 1 oder 2, wobei die Schritte f) und c) und/oder e) erst durchgeführt werden, wenn

$$\frac{s_{neu}}{s_{alt}} - 1 > S,$$

Änderungen der Skale s signifikant werden, insbesondere wenn gilt      wobei S ein vordefinierter Schwellwert ist.

4. Verfahren (10) gemäß einem der vorherigen Ansprüche, ferner umfassend den Schritt:
g) skalengesteuertes Auswählen eines das Template T ersetzenden Ausschnitts in den aktuellen Bilddaten I als neues Template T für den nächsten Bildtakt.

5. Verfahren (10) gemäß einem der vorherigen Ansprüche, wobei in dem Schritt f) ein Intervall der Größe N betrachtet wird und zur Berechnung der Entfernungskorrektur ΔD Mittelwerte über eine vordefinierte Anzahl M an Skalen s an den jeweiligen Intervallenden verwendet werden.

6. Verfahren (10) gemäß einem der vorherigen Ansprüche, wobei in dem Schritt f) zusätzlich ein Lernfilter angewendet wird.

7. Computerprogramm, umfassend Befehle, die bei der Ausführung des Programms durch einen Computer diesen veranlassen, die Schritte des Verfahrens (10) nach einem der vorherigen Ansprüche auszuführen.

8. Computerlesbares Medium (20), auf dem das Computerprogramm gemäß Anspruch 7 gespeichert ist.

9. Vorrichtung zur Datenverarbeitung (30), umfassend Mittel (31, 32) zur Ausführung des Verfahrens (10) nach einem der Ansprüche 1 bis 6.

10. Flugkörper (40), umfassend:

- eine Kamera (44); und
- eine Vorrichtung zur Datenverarbeitung (30) gemäß Anspruch 9,

wobei die Kamera (44) mit der Vorrichtung zur Datenverarbeitung (30) kommunikativ verbunden und ausgebildet ist, wiederholt Bilddaten I an die Vorrichtung zur Datenverarbeitung (30) mit der vordefinierten Bildtaktrate $f_B$ zu senden.

**Fig. 1**

20

Fig. 2

35

30

MON

HID

34

RAM MEM

33

32

31

CPU

Fig. 3

40

44

30

42

41

43

Fig. 4

Europäisches
Patentamt

European
Patent Office

Office européen
des brevets

**EUROPÄISCHER RECHERCHENBERICHT**

Nummer der Anmeldung

EP 21 15 6299

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | HUANG LAN ET AL: "Selection of the optical flow algorithms for flying vehicles with high speed", 2017 29TH CHINESE CONTROL AND DECISION CONFERENCE (CCDC), IEEE, 28. Mai 2017 (2017-05-28), Seiten 5414-5418, XP033121481, DOI: 10.1109/CCDC.2017.7979459 [gefunden am 2017-07-12] * Zusammenfassung; Abbildungen 1-5; Tabellen 1-2 * * Abschnitte 1-4 * ----- | 1-10 | INV. F41G7/22 G01S3/786 G05D1/12 G06T7/246 G08G5/00 |
| A | LIN QI ET AL: "A Method for FLIR Target Tracking Based on Distance Updating", IMAGE AND SIGNAL PROCESSING, 2008. CISP '08. CONGRESS ON, IEEE, PISCATAWAY, NJ, USA, 27. Mai 2008 (2008-05-27), Seiten 135-139, XP031287009, ISBN: 978-0-7695-3119-9 * Zusammenfassung; Abbildungen 1-5 * * Abschnitte 1-6 * ----- | 1-10 | |

RECHERCHIERTE SACHGEBIETE (IPC)

F41G
G01S
G05D
G06T
G08G

Der vorliegende Recherchenbericht wurde für alle Patentansprüche erstellt

| Recherchenort | Abschlußdatum der Recherche | Prüfer |
|---|---|---|
| München | 23. Juni 2021 | Borotschnig, Hermann |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

....................................................................
& : Mitglied der gleichen Patentfamilie, übereinstimmendes
Dokument

EPO FORM 1503 03.82 (P04C03)

**IN DER BESCHREIBUNG AUFGEFÜHRTE DOKUMENTE**

**In der Beschreibung aufgeführte Patentdokumente**

- DE 102011016521 A1

**In der Beschreibung aufgeführte Nicht-Patentliteratur**

- **BRUCE D. LUCAS ; TAKEO KANADE.** An iterative Image Registration Technique with an Application to Stereo Vision. *Proceedings of Imaging Understanding Workshop,* 1981, 121-130